# FASCICULE DE BREVET EUROPEEN

(11) **EP 2 269 008 B1**
(45) Date de publication et mention de la délivrance du brevet: **29.03.2017**
(21) Numéro de dépôt: 09731056.9
(22) Date de dépôt: 07.04.2009
(51) Int. Cl.: G01D 11/28, G01D 13/26

(54) **DISPOSITIF INDICATEUR ET DISPOSITIF D'AFFICHAGE, NOTAMMENT POUR VÉHICULE AUTOMOBILE, ET PROCÉDÉ DE MONTAGE D'UNE AIGUILLE POUR UN DISPOSITIF D'AFFICHAGE**
ANZEIGEVORRICHTUNG, INSBESONDERE FÜR EIN FAHRZEUG, UND VERFAHREN ZUR MONTAGE EINES ZEIGERS EINER ANZEIGEVORRICHTUNG
INDICATOR DEVICE AND DISPLAY DEVICE, PARTICULARLY FOR A MOTOR VEHICLE, AND NEEDLE MOUNTING METHOD FOR A DISPLAY DEVICE

(30) Priorité: 08.04.2008 DE 102008017929; 24.10.2008 FR 0805910; 15.12.2008 FR 0807048
(43) Date de publication de la demande: 05.01.2011
(73) Titulaire: Johnson Controls Technology Company, Holland, MI 49423 (US)
(72) Inventeur: GUILLAUMINAUD, Frédéric, F - 95800 Cergy Le Haut (FR)
(74) Mandataire: Schwöbel, Thilo K.
(86) Numéro de dépôt international: PCT/EP2009/002551
(87) Numéro de publication internationale: WO 2009/124712

(56) Documents cités:
- EP-A- 1 388 731
- EP-A- 1 510 791
- EP-A- 2 048 479
- WO-A-2008/001605
- FR-A- 2 871 564
- FR-A- 2 901 605
- US-A1- 2007 035 960

## Description

La présente invention concerne, un dispositif indicateur à aiguille tel que ceux utilisés notamment à bord des véhicules automobiles pour afficher la vitesse ou le régime moteur du véhicule. Par ailleurs, le présente invention concerne un dispositif d'affichage, notamment pour véhicule automobile, et un procédé de montage d'une aiguille pour un dispositif d'affichage.

Dans certains dispositifs indicateurs, l'organe d'illumination comporte une diode électroluminescente fixée à une extrémité libre de l'aiguille. L'alimentation de la diode électroluminescente est rendue délicate du fait de la mobilité de l'aiguille.

Un dispositif indicateur comprend généralement une platine devant lequel est montée une aiguille. Un tel dispositif indicateur est par exemple connu du document DE 29 02 009 A1. Il est connu d'associer à l'aiguille un organe d'illumination facilitant la visualisation de la position de l'aiguille par rapport au cadran et améliorant ainsi la lisibilité du dispositif indicateur.

L'aiguille est normalement entraînée en mouvement rotatif par un moteur qui comprend un axe en matériau métallique sur lequel est montée l'aiguille. Avec une telle réalisation, il est difficile d'émettre de la lumière dans l'aiguille sur l'axe de rotation de l'aiguille et par conséquent, une multitude de différents organes d'illumination est nécessaire pour illuminer l'aiguille.

Par ailleurs, la zone de la platine au voisinage de l'axe d'entraînement pouvant être relativement encombrée, l'implantation d'une multitude de diodes électroluminescentes peut être difficile.

Par ailleurs, des dispositifs d'affichage sont connus, notamment avec des aiguilles pour afficher par exemple la valeur d'une vitesse ou d'une vitesse de rotation. In est aussi connu de prévoir une aiguille sur la face arrière d'une surface d'affichage d'un dispositif d'affichage. Le document EP 0 785 416 B1 décrit un tel dispositif d'affichage ayant une aiguille derrière une surface d'affichage, notamment pour afficher un repérage de valeur de consigne sur un cadran. Aussi le document WO 2008/001605 décrit un tel dispositif d'affichage ayant une aiguille derrière une surface d'affichage et un élément de boîtier couplant deux parties de l'aiguille.

De telles aiguilles cachées comprennent normalement un guide de lumière pour transporter la lumière d'une source de lumière vers l'endroit où l'information à afficher doit être affichée. Dans la pratique, des fuites de lumière sont fréquentes ce qui diminue la luminosité à l'endroit où l'information doit être affichée et ce qui augmente le besoin en puissance requis de la source de lumière.

Un inconvénient de tels dispositifs d'affichage, selon l'art connu, consiste dans le fait qu'il y a trop de fuites de lumière et que la stabilité mécanique de l'aiguille est insuffisante.

La présente invention a notamment pour but de palier aux inconvénients de l'art connu, et notamment ceux cités ci-dessus, et a également pour but de proposer un dispositif indicateur à aiguille pourvu d'un moyen d'illumination de l'aiguille qui soit simple et facilement positionnable au sein du dispositif ainsi qu'un dispositif d'affichage comprenant une aiguille qui est plus résistante et plus performante.

Suivant la présente invention, il est proposé un dispositif indicateur comportant un cadran, une aiguille étant mobile en rotation autour un axe et par rapport au cadran, l'aiguille étant pourvue d'un guide de lumière, le guide de lumière ayant une portion d'entrée et d'une portion de sortie, le dispositif indicateur ayant au moins un organe d'illumination, la portion d'entrée et l'organe d'illumination étant positionnés sur l'axe de rotation.

Ainsi, il est possible de positionner l'organe d'illumination au voisinage immédiat ou en regard de l'aiguille, ce qui simplifie la conception du dispositif indicateur et la structure en résultant.

Selon un mode de réalisation préféré de la présente invention, la portion d'entrée du guide de lumière est positionnée opposée à l'organe d'illumination.

De par une telle réalisation du dispositif indicateur, il est avantageusement possible de réaliser un transfert quasiment direct de la lumière de l'organe d'illumination vers la portion d'entrée du guide de lumière de l'aiguille.

Selon un autre mode de réalisation préféré de la présente invention, la portion d'entrée et l'organe d'illumination sont positionnés de manière centrée sur l'axe de rotation.

De par une telle réalisation du dispositif indicateur, il est avantageusement possible de réaliser une illumination de l'aiguille à l'aide d'un organe d'illumination comparativement compact et peu couteux.

Selon encore un autre mode de réalisation préféré de la présente invention, l'organe d'illumination est positionné de façon fixe à un élément de support, notamment une platine imprimée ou une plaque conductrice.

De par une telle réalisation du dispositif indicateur, il est avantageusement possible de réaliser le dispositif indicateur de manière simple et avec des techniques de montage connues.

Selon encore un autre mode de réalisation préféré de la présente invention, le dispositif indicateur comprend un moteur relié à l'aiguille de sorte à pouvoir tourner l'aiguille autour de l'axe de rotation, le moteur étant notamment un moteur pas à pas.

Selon encore un autre mode de réalisation préféré de la présente invention, le moteur est un moteur sans arbre de rotation ou sans axe de rotation ou le moteur est un moteur avec un arbre de rotation ayant un évidement.

Selon encore un autre mode de réalisation préféré de la présente invention, la portion d'entrée du guide de lumière est positionnée dans l'évidement.

Selon encore un autre mode de réalisation préféré de la présente invention, l'aiguille est une aiguille de type coudé, notamment une aiguille qui s'étend de l'axe radialement vers un endroit périphérique du dispositif indicateur pour ensuite s'étendre axialement par rapport à l'axe et pour revenir radialement une partie de la distance entre l'axe de rotation et l'endroit périphérique pour réaliser une partie de sortie de l'aiguille. Ainsi, il est possible que la pointe de l'aiguille soit visible par un utilisateur du dispositif indicateur même s'il y a pas d'illumination de l'aiguille.

Par ailleurs, la présente invention propose un dispositif d'affichage, notamment pour véhicule automobile, comprenant une surface d'affichage et une aiguille, la surface d'affichage ayant une face avant dirigée vers un utilisateur et une face arrière, l'aiguille étant prévue à la face arrière de la surface d'affichage, l'aiguille comprenant un guide de lumière, l'aiguille comprenant au moins un élément de boîtier, l'élément de boîtier couvrant au moins partiellement le guide de lumière.

De par une telle réalisation d'un dispositif d'affichage, il est avantageusement possible de minimiser les fuites de lumière associées avec l'aiguille.

Un perfectionnement particulièrement préféré de l'invention réside dans le fait que l'aiguille comprend une zone d'extrémité, une zone axiale, et une zone médiane, l'élément de boîtier entourant l'aiguille au moins dans sa zone médiane.

Ceci permet la réalisation du dispositif d'affichage avec encore une plus grand protection contre les fuites de lumière.

Un autre perfectionnement préféré de l'invention réside dans le fait que l'élément de boîtier comprend un couvercle supérieur et un couvercle inférieur.

De par une telle réalisation de l'aiguille, il est avantageusement possible d'assurer un procédé de montage facile et efficace.

Un perfectionnement préféré de l'invention réside dans le fait que le couvercle supérieur entoure le guide de lumière pour la plupart de la zone d'extrémité.

De par une telle réalisation, il est avantageusement possible de réduire d'avantage les fuites de lumière du guide de lumière de l'aiguille selon la présente invention.

Un autre perfectionnement préféré de l'invention réside dans le fait que la surface de la section transversale du guide de lumière est prévue essentiellement constante entre la zone d'extrémité et la zone axiale et que notamment la section transversale du guide de lumière est prévue essentiellement ronde.

De par une telle réalisation de l'aiguille ou du guide de lumière, il est avantageusement possible d'améliorer le transport de lumière vers la zone d'extrémité de l'aiguille et notamment vers la pointe de l'aiguille selon la présente invention.

Un autre perfectionnement préféré de l'invention réside dans le fait que la direction d'extension du guide de lumière dans la zone d'extrémité d'une part et la direction d'extension du guide de lumière dans la zone médiane d'autre part font un angle, notamment un angle droit.

De par une telle réalisation de l'aiguille, il est avantageusement possible de réaliser un procédé de montage simple et efficace avec des étapes de montage qui peuvent être effectuées de manière rapide.

Un perfectionnement particulièrement préféré de l'invention réside dans le fait que la direction d'extension du guide de lumière dans la zone axiale d'une part et la direction d'extension du guide de lumière dans la zone médiane d'autre part font un angle, notamment un angle droit.

De par une telle réalisation de l'aiguille, il est avantageusement possible de réaliser un procédé de montage encore plus simple et efficace pendant une étape de montage du guide de lumière.

Par ailleurs, la présente invention concerne également un procédé de montage d'une aiguille pour un dispositif d'affichage selon la présente invention, le procédé de montage comprenant une étape de montage du guide de lumière avec le couvercle supérieur et une étape de montage du guide de lumière avec le couvercle inférieur.

De par une telle réalisation, le procédé de montage peut être effectué d'une manière simple et efficace.

D'autres caractéristiques et avantages de l'invention ressortiront de la lecture de la description qui suit d'un mode de réalisation particulier non limitatif de la présente invention.

### BREVE DESCRIPTION DES DESSINS

L'invention sera mieux comprise grâce à la description ci-après, qui se rapporte à des modes de réalisation préférés, donnés à titre d'exemple non limitatifs et expliqués avec références aux dessins schématiques annexés, dans lesquels :
la figure 1 est une vue schématique de face d'un dispositif d'affichage selon la présente invention,
la figure 2 est une vue schématique selon une section transversale du dispositif d'affichage selon la présente invention,
la figure 3 est une vue schématique perspective d'une aiguille pour le dispositif d'affichage selon la présente invention,
la figure 4 est une vue schématique d'explosion de l'aiguille pour le dispositif d'affichage selon la présente invention,
la figure 5 est une vue schématique perspective d'un dispositif, indicateur conforme à l'invention,
la figure 6 est une vue schématique en coupe d'un tel dispositif indicateur,
la figure 7 est une vue schématique de face d'un tel dispositif indicateur, et
la figure 8 est une autre vue schématique de face d'un tel dispositif indicateur.

### DESCRIPTION DES DESSINS

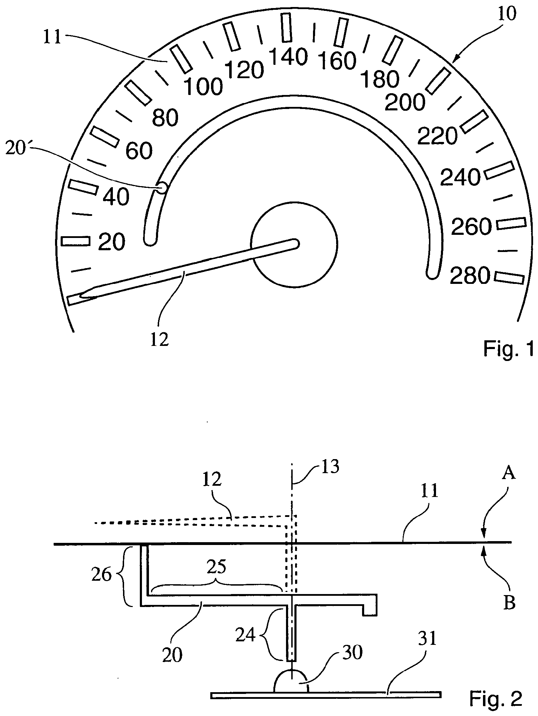

Comme le montre la figure 1 du dessin annexé, un dispositif d'affichage 10 selon la présente invention comprend une surface d'affichage 11, notamment en forme de cadran. La figure 1 du dessin montre le dispositif d'affichage 10 comme un utilisateur du dispositif d'affichage 10 le voit, notamment comme un conducteur du véhicule dans lequel le dispositif d'affichage 10 est monté. De cette perspective, seulement une zone lumineuse 20' est visible sur la surface d'affichage 11 pour l'affichage d'une information, notamment une information d'aide, et notamment la valeur d'une vitesse souhaitée ou la valeur d'une limite de vitesse à observer ou la valeur d'une vitesse de rotation. Selon la présente invention, une aiguille (pas montrée dans la figure 1) est prévue pour l'affichage de la zone lumineuse 20' sur la surface d'affichage 11.

Le dispositif d'affichage 10 peut aussi comprendre une aiguille 12 supplémentaire qui est notamment positionnée à la face avant de la surface d'affichage 11.

La figure 2 montre une vue schématique selon une section transversale du dispositif d'affichage 10 selon la présente invention. La face avant A de la surface d'affichage 11 est la face qui est visible d'un utilisateur, notamment un conducteur du véhicule dans lequel le dispositif d'affichage 10 est monté. La face arrière B de la surface d'affichage 11 est cachée de la vue de l'utilisateur. L'aiguille 20 se trouve à la face arrière B de la surface d'affichage 11.

L'aiguille 20 peut être pivotée autours un axe de rotation 13. L'axe de rotation 13 est notamment aussi l'axe de rotation de l'aiguille supplémentaire 12.

Une source de lumière 30 est prévue pour envoyer de la lumière dans un guide de lumière (ne pas montré dans la figure 2). Le guide de lumière transporte la lumière vers la pointe ou la partie d'extrémité de l'aiguille 20. L'aiguille comprend une zone axiale 24, une zone médiane 25 et une zone d'extrémité 26. A la pointe de l'aiguille 20, la lumière sort de l'aiguille 20 et entre la surface d'affichage 11 pour réaliser la zone lumineuse 20' sur la surface d'affichage 11. La source de lumière 30 est notamment prévue sous forme de diode électroluminescente (LED, light emitting diode). La source de lumière 30 peut être positionnée sur un support 31, notamment une platine imprimée (PCB, printed circuit board). La source de lumière 30 peut notamment faire partie d'un dispositif de source de lumière pour éclairer le retro-éclairage des échelles du dispositif d'affichage. De par une telle réalisation de la source de lumière 30 pour éclairer l'aiguille, il est avantageusement possible de réaliser le dispositif d'affichage de manière simple et peu couteux, car une source de lumière séparée pour l'aiguille 20 peut être évitée et la platine imprimée 31 peut être utilisée aussi pour l'éclairage de l'aiguille 20.

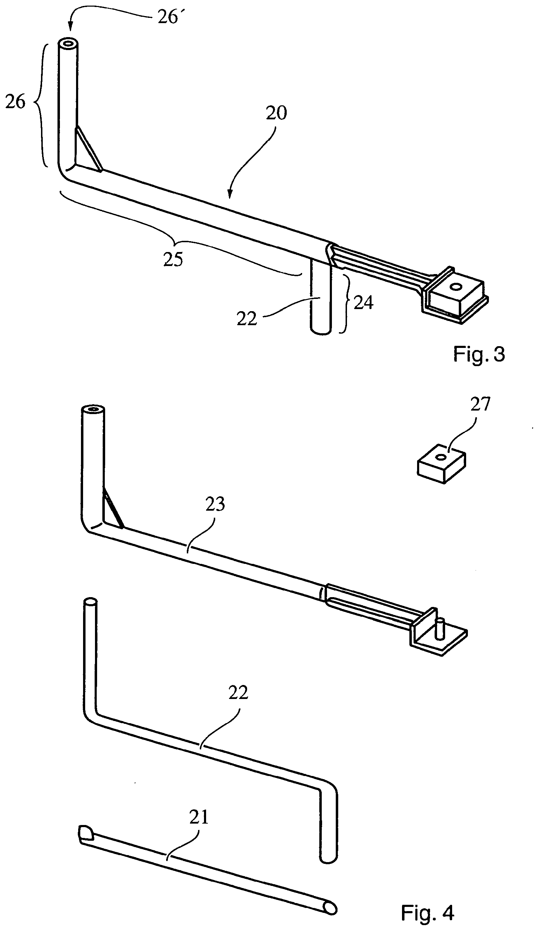

La figure 3 montre une vue schématique perspective de l'aiguille 20 pour le dispositif d'affichage 10 selon la présente invention, et la figure 4 montre l'aiguille 20 en représentation d'explosion de l'aiguille 20. Des figures 3 et 4, on peut voir que l'aiguille 20 comprend un boîtier dans lequel le guide de lumière 22 est positionné. A l'exception de la partie axiale 22 de l'aiguille 20 et à l'exception de la pointe 26' de l'aiguille 20, le guide de lumière 22 est entouré par le boîtier. Notamment dans la zone médiane 25 de l'aiguille 20, le boîtier entoure le guide de lumière 22. Ainsi, il est avantageusement possible d'éviter ou au moins de réduire les fuites de lumière qui peuvent avoir des effets négatifs sur la performance et l'aspect esthétique du dispositif d'affichage 10.

Le boîtier comprend notamment un couvercle supérieur 23 et un couvercle inférieur 21. Le guide de lumière se trouve entre le couvercle supérieur 23 et le couvercle inférieur 21.

Le montage de l'aiguille 20 peut être effectué d'une manière simple et efficace en assemblant le guide de lumière 22 dans une ouverture du couvercle supérieur 23 (dans la zone d'extrémité 26 de l'aiguille 20) et en assemblant le guide de lumière 22 dans une ouverture du couvercle inférieur 21 (dans la zone axiale 24 de l'aiguille 20). Les couvercles supérieurs et inférieurs 23, 21 peuvent être attachés l'un à l'autre, par exemple à travers une fixation par enclenchement. Un contrepoids 27 est également prévu pour balancer l'aiguille 20.

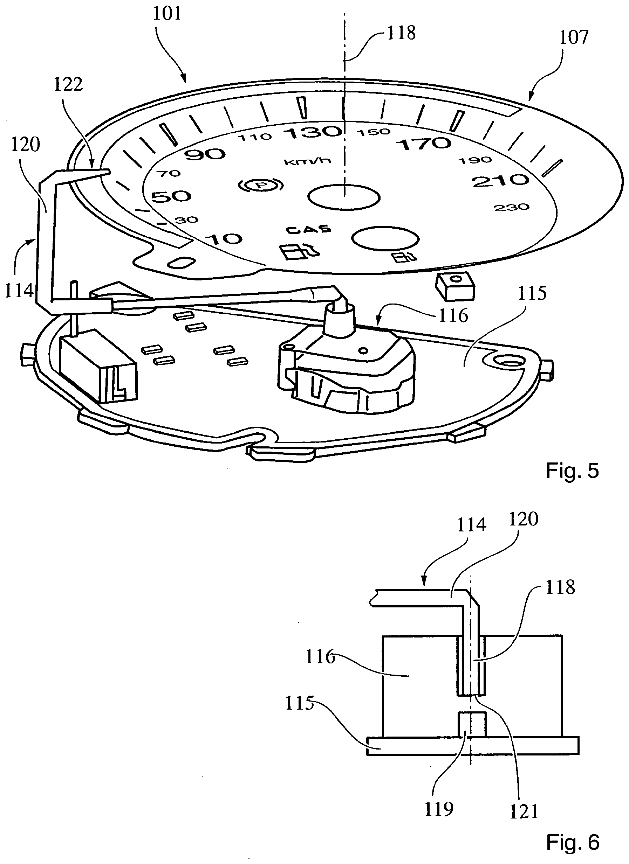

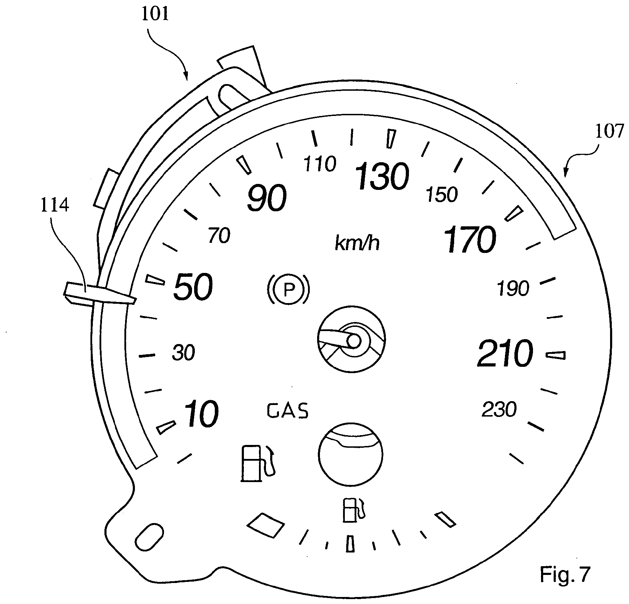

Concernant le dispositif indicateur selon la présente invention, un tel dispositif peut être implanté dans un véhicule automobile comme il est représenté dans les figures 5 à 8. Le dispositif indicateur peut combiner, par exemple, l'affichage de la vitesse momentanée et l'affichage d'une vitesse souhaitée. Le dispositif indicateur, et notamment l'aiguille du dispositif indicateur, peut aussi comprendre un boîtier comme décrit pour le cas du dispositif d'affichage auparavant en relation avec les figures 1 à 4. Ainsi, des effets négatifs des fuites de lumière peuvent être réduits.

Le dispositif indicateur est généralement désigné en 101 et comprend un élément de support 115 (notamment sous forme d'une platine imprimée ou d'une plaque conductrice) sur lequel est monté - dans l'exemple représenté - un organe d'illumination 119, notamment sous forme de diode électroluminescente, qui peut émettre de la lumière.

Un cadran, généralement désigné en 107, a par exemple une forme ronde ou de couronne et est positionné dans la direction vers un utilisateur du dispositif indicateur.

Une aiguille 114 est montée d'une telle manière par rapport au cadran 107 que l'aiguille 114 peut être tournée de façon rotative autour d'un axe de rotation 118. Le mouvement de l'aiguille autour de l'axe de rotation 118 est généralement entraîné à l'aide d'un moteur 116.

L'aiguille 114 comprend un guide de lumière 120 ayant une partie d'entrée 121 et une partie de sortie 122. Selon la présente invention, il est prévu que la partie d'entrée 121 et l'organe d'illumination 119 sont positionnés sur l'axe 118 de rotation, notamment d'une manière à faciliter un transfert de la lumière entre l'organe d'illumination 119 d'une part, et la partie d'entrée 121, d'autre part.

L'aiguille 114 peut être une aiguille de type coudée, c'est à dire une aiguille 114 qui s'étend de l'axe de rotation 118 radialement vers un endroit périphérique du dispositif indicateur 101 pour ensuite s'étendre axialement par rapport à l'axe de rotation 118 et pour revenir radialement une partie de la distance entre l'axe de rotation 118 et l'endroit périphérique pour réaliser une partie de sortie 122 de l'aiguille 114 ou du guide de lumière 120 de l'aiguille 114.

Il est ainsi possible d'afficher et d'illuminer l'endroit de l'aiguille 114 dans une partie périphérique du dispositif indicateur 101, notamment pour afficher une vitesse souhaitée de type réglage de vitesse ou une valeur de consigne ou alors une valeur de vitesse dynamique.

Comme il est notamment visible dans la figure 6, le moteur 116 est soit un moteur sans arbre de rotation ou un moteur avec un arbre de rotation ayant un évidement (shaftless) dans lequel la partie d'entrée du guide de lumière 120 de l'aiguille peut être logée pour permettre le transfert de la lumière de l'organe d'illumination 119 vers l'aiguille 114.

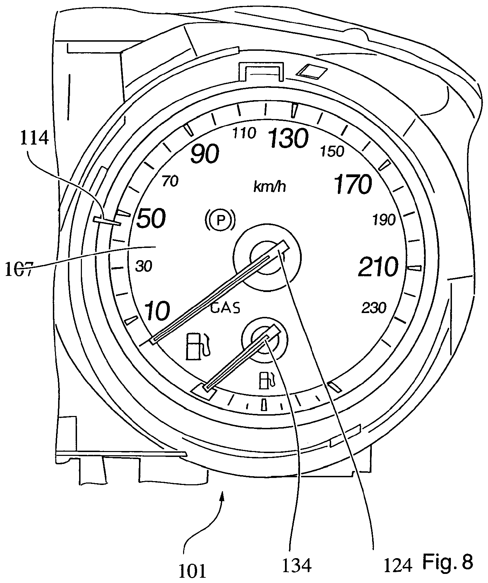

Comme le montre la figure 8, à part de l'aiguille 114, le dispositif indicateur 101 peut aussi comprendre une deuxième aiguille 124 et/ou une troisième aiguille 134, les deuxième et troisième aiguilles étant des aiguilles qui ne sont pas coudées, c'est à dire des aiguilles qui s'étendent axialement par rapport à l'axe de rotation 118 et qui s'étendent après de l'axe de rotation 118 radialement vers un endroit périphérique du dispositif indicateur 101.

Dans un mode de réalisation non montré, l'aiguille 114 peut aussi être réalisée de manière non-coudée (par exemple la deuxième aiguille 124 peut être du type coudée).

## Revendications

1. Dispositif d'affichage (10), notamment pour véhicule automobile, comprenant une surface d'affichage (11) et une aiguille (20), la surface d'affichage (11) ayant une face avant (A) dirigée vers un utilisateur et une face arrière (B), l'aiguille (20) étant prévue à la face arrière (B) de la surface d'affichage (11), l'aiguille (20) comprenant un guide de lumière (22), l'aiguille (20) comprenant au moins un élément de boîtier, l'élément de boîtier couvrant au moins partiellement le guide de lumière (22),
l'aiguille (20) comprenant une zone d'extrémité (26), une zone axiale (24), et une zone médiane (25), l'élément de boîtier entourant l'aiguille (20) au moins dans sa zone médiane (25)
**caractérisé en ce que** l'élément de boîtier comprend un couvercle supérieur (23) et un couvercle inférieur (21)

2. Dispositif d'affichage (10) selon la revendication 1, dans lequel le couvercle supérieur (23) entoure le guide de lumière (22) pour la plupart de la zone d'extrémité (26).

3. Dispositif d'affichage (10) selon l'une quelconque des revendications précédentes, dans lequel la surface de la section transversale du guide de lumière (22) est prévue essentiellement constante entre la zone d'extrémité (26) et la zone axiale (24).

4. Dispositif d'affichage (10) selon l'une quelconque des revendications précédentes, dans lequel la section transversale du guide de lumière (22) est prévue essentiellement ronde.

5. Dispositif d'affichage (10) selon l'une quelconque des revendications précédentes, dans lequel la direction d'extension du guide de lumière (22) dans la zone d'extrémité (26) d'une part et la direction d'extension du guide de lumière (22) dans la zone médiane (25) d'autre part font un angle, notamment un angle droit.

6. Dispositif d'affichage (10) selon l'une quelconque des revendications précédentes, dans lequel la direction d'extension du guide de lumière (22) dans la zone axiale (24) d'une part et la direction d'extension du guide de lumière (22) dans la zone médiane (25) d'autre part font un angle, notamment un angle droit.

7. Dispositif d'affichage (10) selon l'une quelconque des revendications précédentes, dans lequel l'aiguille (20) comprend un contrepoids (27), le contrepoids (27) étant notamment attaché au couvercle supérieur (23).

8. Procédé de montage d'une aiguille (20) pour un dispositif d'affichage (10) selon l'une quelconque des revendications précédentes, **caractérisé en ce que** le procédé de montage comprend une étape de montage du guide de lumière (22) avec le couvercle supérieur (23) et une étape de montage du guide de lumière (22) avec le couvercle inférieur (21).

## Patentansprüche

1. Anzeigevorrichtung (10), insbesondere für ein Kraftfahrzeug, umfassend eine Anzeigefläche (11) und eine Nadel (20), wobei die Anzeigefläche (11) eine zu einem Benutzer weisende Vorderseite (A) und eine Rückseite (B) aufweist, wobei die Nadel (20) an der Rückseite (B) der Anzeigefläche (11) vorgesehen ist, wobei die Nadel (20) einen Lichtleiter (22) umfasst, wobei die Nadel (20) mindestens ein Gehäuseelement umfasst, wobei das Gehäuseelement den Lichtleiter (22) zumindest teilweise bedeckt,
wobei die Nadel (20) einen Endbereich (26), einen Axialbereich (24) und einen Mittelbereich (25) umfasst, wobei das Gehäuseelement die Nadel (20) mindestens in dem Mittelbereich (25) umgibt,
**dadurch gekennzeichnet, dass** das Gehäuseelement eine obere Abdeckung (23) und eine untere Abdeckung (21) umfasst.

2. Anzeigevorrichtung (10) nach Anspruch 1, wobei die obere Abdeckung (23) den Lichtleiter (22) über den Großteil des Endbereichs (26) umgibt.

3. Anzeigevorrichtung (10) nach einem der vorhergehenden Ansprüche, wobei die Querschnittsfläche des Lichtleiters (22) zwischen dem Endbereich (26) und dem Axialbereich (24) im Wesentlichen konstant vorgesehen ist.

4. Anzeigevorrichtung (10) nach einem der vorhergehenden Ansprüche, wobei der Querschnitt des Lichtleiters (22) im Wesentlichen rund vorgesehen ist.

5. Anzeigevorrichtung (10) nach einem der vorhergehenden Ansprüche, wobei einerseits die Erstreckungsrichtung des Lichtleiters (22) im Endbereich (26) und andererseits die Erstreckungsrichtung des Lichtleiters (22) im Mittelbereich (25) einen Winkel, im Wesentlichen einen rechten Winkel, bilden.

6. Anzeigevorrichtung (10) nach einem der vorhergehenden Ansprüche, wobei einerseits die Erstreckungsrichtung des Lichtleiters (22) im Axialbereich (24) und andererseits die Erstreckungsrichtung des Lichtleiters (22) im Mittelbereich (25) einen Winkel, im Wesentlichen einen rechten Winkel, bilden.

7. Anzeigevorrichtung (10) nach einem der vorhergehenden Ansprüche, wobei die Nadel (20) ein Gegengewicht (27) umfasst, wobei das Gegengewicht (27) im Wesentlichen an der oberen Abdeckung (23) befestigt ist.

8. Verfahren zur Montage einer Nadel (20) für eine Anzeigevorrichtung (10) nach einem der vorhergehenden Ansprüche, **dadurch gekennzeichnet, dass** das Montageverfahren einen Schritt des Montierens des Lichtleiters (22) mit der oberen Abdeckung (23) und einen Schritt des Montierens des Lichtleiters (22) mit der unteren Abdeckung (21) umfasst.

## Claims

1. Display device (10), notably for a motor vehicle, comprising a display surface (11) and a needle (20), the display surface (11) having a front face (A) directed toward a user and a rear face (B), the needle (20) being provided on the rear face (B) of the display surface (11), the needle (20) comprising a light guide (22), the needle (20) comprising at least one casing element, the casing element covering at least partially the light guide (22), the needle (20) comprising an end zone (26), an axial zone (24) and a middle zone (25), the casing element surrounding the needle (20) at least in its middle zone (25) **characterized in that** the casing element comprises a top cover (23) and a bottom cover (21).

2. Display device (10) according to Claim 1, wherein the top cover (23) surrounds the light guide (22) for most of the end zone (26).

3. Display device (10) according to either of the preceding claims, wherein the area of the cross section of the light guide (22) is designed to be essentially constant between the end zone (26) and the axial zone (24).

4. Display device (10) according to any one of the preceding claims, wherein the cross section of the light guide (22) is designed to be essentially round.

5. Display device (10) according to any one of the preceding claims, wherein the direction of extension of the light guide (22) in the end zone (26) on the one hand, and the direction of extension of the light guide (22) in the middle zone (25) on the other hand form an angle, notably a right angle.

6. Display device (10) according to any one of the preceding claims, wherein the direction of extension of the light guide (22) in the axial zone (24) on the one hand, and the direction of extension of the light guide (22) in the middle zone (25) on the other hand form an angle, notably a right angle.

7. Display device (10) according to any one of the preceding claims, wherein the needle (20) comprises a counterweight (27), the counterweight (27) being notably attached to the top cover (23).

8. Method for assembling a needle (20) for a display device (10) according to any one of the preceding claims, **characterized in that** the assembly method comprises a step of assembling the light guide (22) with the top cover (23) and a step of assembling the light guide (22) with the bottom cover (21).
